# EUROPÄISCHE PATENTSCHRIFT

(11) **EP 1 246 371 B1**
(45) Veröffentlichungstag und Bekanntmachung des Hinweises auf die Patenterteilung: **12.07.2006**
(21) Anmeldenummer: 02003247.0
(22) Anmeldetag: 21.02.2002
(51) Int. Cl.: H04B 1/707, H04B 7/08

(54) **Verfahren und Vorrichtung zum dynamischen verteilen der Korrelator-Ressourcen eines funkbasierten CDMA Kommunikationssystems**
Method and apparatus for dynamically allocating the correlator ressources in a radio CDMA communication system
Méthode et procédé pour allouer de manière dynamique les ressources de corrélation dans un système de communication radio AMRC

(30) Priorität: 31.03.2001 DE 10116170
(43) Veröffentlichungstag der Anmeldung: 02.10.2002
(73) Patentinhaber: ALCATEL, 75008 Paris (FR)
(72) Erfinder: Jeschke, Michael, Dipl.-Ing., 70197 Stuttgart (DE)
(74) Vertreter: Rausch, Gabriele

(56) Entgegenhaltungen:
- EP-A- 0 691 754
- EP-A- 1 028 540
- EP-A- 1 158 688
- US-A- 5 490 165
- US-A- 5 684 793
- US-A- 5 999 560

## Beschreibung

Die Erfindung geht aus von einem Verfahren zum Betreiben eines funkbasierten Kommunikationssystems entsprechend dem Oberbegriff des Anspruchs 1. Ein derartiges Verfahren ist aus der US-A-5490165 bekannt. Weiterhin betrifft die Erfindung ein entsprechendes funkbasiertes Kommunikationssystem und eine entsprechende Basisstation hierfür.

Beispielsweise bei einem sogenannten CDMA-Kommunikationssystem (CDMA = code division multiple access) wird für eine bestimmte Anzahl von Mobilstationen jeweils eine bestimmte Anzahl sogenannter Path-Profiler und eine bestimmte Anzahl sogenannter Rake-Finger bereitgehalten. Mit dem Path-Profiler wird nach neuen Signalpfaden gesucht, über die die zugehörige Mobilstation Signale an die Basisstation sendet. Von jedem der Path-Profiler wird ein Profil des empfangenen Signals erstellt, das aus einer Vielzahl von Einzelwerten besteht. Aus diesem Profil werden denjenigen Einzelwerten jeweils ein Rake-Finger zugeordnet, die einen vorgegebenen Schwellwert übersteigen. Die Anzahl der Path-Profiler, wie auch die Anzahl der Rake-Finger muss für jede Mobilstation derart groß gewählt werden, dass immer - auch bei einer großen Anzahl von Mobilstationen und bei vielen Hindernissen im örtlichen Bereich der zugehörigen Basisstation - ein sicherer Betrieb des Kommunikationssystems möglich ist. Dies erfordert einen großen Aufwand insbesondere an Hardware für die Path-Profiler und/oder die Rake-Finger, der im Betrieb des Kommunikationssystems nur selten in vollem Umfang ausgenutzt wird.

Aufgabe der Erfindung ist es, ein Verfahren der eingangs genannten Art zu schaffen, das einen geringeren Aufwand erfordert.

Diese Aufgabe wird durch das Verfahren gemäß dem Anspruch 1 gelöst. Ebenfalls wird die Aufgabe durch die Basisstation nach dem Anspruch 11 sowie durch das Kommunikationssystem nach dem Anspruch 15 gelöst.

Die Anzahl der Path-Profiler und/oder der Rake-Finger ist bei der Erfindung - wie beim Stand der Technik - fest vorgegeben. Der Unterschied der Erfindung im Vergleich zum Stand der Technik besteht darin, dass die vorhandenen Path-Profiler und/oder die vorhandenen Rake-Finger nicht fest einer bestimmten Mobilstation oder einer Antenne zugeordnet sind, sondern dass sie erfindungsgemäß flexibel unterschiedlichen Mobilstationen zugeordnet werden können. Damit ist es bei der Erfindung ausreichend, nur etwa 50 % bis etwa 70 % der beim Stand der Technik vorhandenen Path-Profiler bzw. Rake-Finger vorzusehen. Dies stellt eine wesentliche Verminderung insbesondere des Hardware-Aufwands dar. Der gleichzeitig erforderliche Aufwand für die erfindungsgemäß vorgesehenen Path-Profiler-Manager bzw. Rake-Finger-Manager ist dabei vernachlässigbar.

Weiterhin ist es durch die flexible Zuteilung der Path-Profiler bzw. Rake Finger zu den vorhandenen Mobilstationen möglich, sogar eine größere Anzahl der Path-Profiler bzw. Rake-Finger einer bestimmten Mobilstation zuzuordnen als dies im Vergleich beim Stand der Technik mit seiner jeweils festen Anzahl der Fall ist. Dies bringt insbesondere bei einer großen Anzahl von Hindernissen im örtlichen Bereich der Basisstation den Vorteil mit sich, dass die in diesem Fall von der Basisstation empfangenen Signale besser erkannt werden können als beim Stand der Technik.

Die Zuteilung der vorhandenen Path-Profiler bzw. Rake-Finger zu den verschiedenen Mobilstationen kann auf unterschiedliche Arten vorgenommen werden. So ist es unter anderem vorteilhaft, wenn die in einem Path-Profiler vorhandenen Korrelatoren nicht, wie an sich üblich, dem Signal einer einzigen Mobilstation zugeordnet werden, sondern z.B. im Zeitmultiplex hälftig auf zwei Signale verteilt werden. Ebenfalls ist es vorteilhaft, wenn der für die Auswahl der Einzelwerte maßgebliche Schwellwert in Abhängigkeit von der Anzahl der noch verfügbaren Rake-Receiver veränderbar ist. Mit beiden Maßnahmen kann erreicht werden, dass die Anzahl der vorhandenen Path-Profiler bzw. Rake-Receiver nicht überschritten wird.

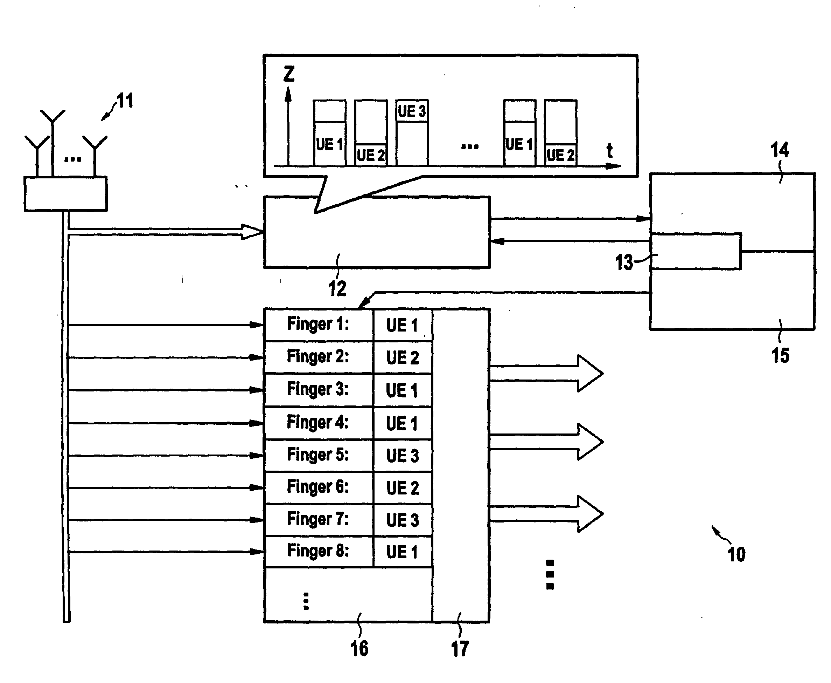

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind.

Die einzige Figur der Zeichnung zeigt ein schematisches Blockschaltbild eines Ausführungsbeispiels einer erfindungsgemäßen Basisstation eines funkbasierten Kommunikationssystems.

In der Figur ist eine Basisstation 10 (auch als Node B bezeichnet) dargestellt, die mit einer Mehrzahl von Antennen 11 verbunden ist. Mit den Antennen 11 können Signale von Mobilstationen (auch als User Equipments = UEs bezeichnet) empfangen werden, die sich im örtlichen Bereich der Basisstation 10 befinden. Weiterhin sind eine Mehrzahl von sogenannten Path-Profiler-Einheiten 12 vorhanden, die von einem sogenannten Path-Profiler-Manager 13 verwaltet werden. Den Path-Profiler-Einheiten 12 sind die von den Antennen 11 empfangenen Signale zugeführt. Eine sogenannte Path-Selector-Einheit 14 wird von den Path-Profiler-Einheiten 12 beaufschlagt und beeinflusst in Abhängigkeit davon den Path-Profiler-Manager 13 und einen sogenannten Rake-Finger-Manager 15. Dieser Rake-Finger-Manager 15 verwaltet eine Mehrzahl von sogenannten Rake-Finger-Einheiten 16. Den Rake-Finger-Einheiten 16 sind die von den Antennen 11 empfangenen Signale zugeführt. Die von den Rake-Finger-Einheiten 16 erzeugten Signale werden von einer Kombinationseinheit 17 zu einer Mehrzahl von Ausgangssignalen zusammengefasst.

Die Path-Profiler-Einheiten können z.B. als programmierbare logische Schaltungen ausgebildet sein, insbesondere in der Form von sogenannten FPGAs (FPGA = field programable gate array) oder ASICs (ASIC = application specific integrated circuit). Entsprechendes gilt für die Rake-Finger-Einheiten 16. Der Path-Profiler-Manager 13 kann z.B. als digitaler Mikroprozessor ausgebildet sein, insbesondere als sogenannter DSP (DSP = digital signal processor). Entsprechendes gilt für den Rake-Finger-Manager 15 und für die Path-Selector-Einheit 14.

Von jeder der Mobilstationen können mehrere Signalpfade zu den Antennen 11 der Basisstation 10 vorhanden sein. Die Anzahl und der Verlauf der Signalpfade hängt unter anderem von der Anzahl und Ausgestaltung von Hindernissen ab, die sich im örtlichen Bereich der Basisstation (10) und/oder der jeweiilgen Mobilstation befinden.

Jede der Path-Profiler-Einheiten 12 ist dazu vorgesehen, vorhandene Signalpfade und neu hinzukommende Signalpfade zu erkennen. Hierzu weist jede der Path-Profiler-Einheiten 12 eine Vielzahl von Korrelatoren auf, die die von den Antennen empfangenen Signale der verschiedenen Signalpfade mit vorgegebenen Signalen vergleichen. Daraus erzeugt jede der Path-Profiler-Einheiten 12 ein Profil des jeweiligen Signals. Diese Profile werden auch als Leistungsprofile oder Impulsantwort-Profile oder Mehrwegeprofile bezeichnet. Jedes der Profile wird z.B. während einer Korrelationsdauer von 10 Millisekunden erzeugt und besteht z.B. aus 192 Einzelwerten mit einer zeitlichen Auflösung von 0,13 Mikrosekunden. Für die Erzeugung eines Einzelwerts ist dabei ein Korrelator erforderlich. Insgesamt ergeben sich damit für eine bestimmte Zeitdauer eine Mehrzahl von Profilen für die Signale der verschiedenen Signalpfade.

Von dem Path-Profiler-Manager 13 werden die Path-Profiler-Einheiten 12 den im örtlichen Bereich der Basisstation 10 vorhandenen Mobilstationen und jeweils einer der Antennen 11 beliebig zugeteilt. Diese Zuordnung Z von Path-Profiler-Einheiten 12 zu Mobilstationen ist ebenfalls in der Figur schematisch über der Zeit t dargestellt.

Für eine bestimmte Antenne und eine bestimmte Mobilstation wird der Aufruf der Korrelatoren der Path-Profiler-Einheiten 12 andauernd in möglichst kurzen Zeitabständen wiederholt. Der Zeitabstand kann dabei flexibel verändert werden, insbesondere kann der Zeitabstand der Wiederholungen vergrößert werden, wenn eine große Anzahl von Mobilstationen sich innerhalb des örtlichen Bereichs der Basisstation 10 befinden, und/oder wenn von einer Mobilstation mehrerere Signalpfade zu verschiedenen Antennen vorhanden sind.

Dem Path-Profiler-Manager 13 stehen eine bestimmte Anzahl von Path-Profiler-Einheiten 12 zur Verteilung an die vorhandenen Mobilstationen zur Verfügung. Der Path-Profiler-Manager 13 überwacht andauernd, dass nicht mehr Path-Profiler-Einheiten 12 verteilt werden als vorhanden sind. Wird die bestimmte Anzahl der Path-Profiler-Einheiten 12 erreicht, so ergreift der Path-Profiler-Manager 13 Maßnahmen, um ein Übersteigen dieser Anzahl zu vermeiden.

Diese Maßnahmen können z.B. darin bestehen, den Zeitabstand der Wiederholungen von Berechnungen des Profils für eine bestimmte Mobilstation und eine bestimmte Antenne zu vergrößern, um damit die Anzahl von erforderlichen Path-Profiler-Einheiten 12 pro Zeitdauer zu vermindern. Dabei ist es zusätzlich möglich, den Zeitabstand für verschiedene Mobilstationen bzw. für verschiedene Antennen unterschiedlich groß vorzusehen.

Weiterhin ist es möglich, für jedes empfangene Signal anstelle der erwähnten 192 Korrelatoren z.B. nur die Hälfte, also 96 Korrelatoren in den Path-Profiler-Einheiten (12) vorzusehen. Dies ergibt üblicherweise nur einen geringen Fehler, da die erste Hälfte des erzeugten Profils zumeist von größerer Bedeutung ist als die zweite Hälfte. Gleichzeitig können aber durch diese Maßnahme die freiwerdenden Korrelatoren der Path-Profiler-Einheiten (12) an andere empfangene Signale verteilt werden.

Die von den Path-Profiler-Einheiten 12 in Abhängigkeit von den empfangenen Signalen erzeugten Profile für die verschiedenen Signale werden der Path-Selector-Einheit 14 zugeführt. In Abhängigkeit von den erhaltenen Profilen und in Abhängigkeit von vorgegebenen Selektionsbedingungen wählt die Path-Selector-Einheit 14 bestimmte Einzelwerte der Profile aus. Üblicherweise handelt es sich bei den Selektionsbedingungen zumindest um einen Schwellwert, der von den Einzelwerten der Profile überschritten werden muss, so dass die ausgewählten Einzelwerte üblicherweise den am stärksten zu empfangenden Signalen zugehören.

In Abhängigkeit von den ausgewählten Einzelwerten teilt dann der Rake-Finger-Manager 15 jedem dieser Einzelwerte eine der Rake-Finger-Einheiten 16 zu. Zu diesem Zweck erhält der Rake-Finger-Manager 15 Informationen über die von dem Path-Profiler-Selector 14 ausgewählten Einzelwerte und deren Eintreffzeitpunkte. Da mehrere Einzelwerte innerhalb eines einzelnen Profils von dem Path-Profiler-Selector 14 ausgewählt werden können, kann auch der Rake-Finger-Manager 15 mehrere Rake-Finger-Einheiten 16 einem einzelnen Profil zuordnen. Dies bedeutet letztlich, dass mehrere Rake-Finger-Einheiten 16 einer einzelnen Mobilstation zugeteilt werden, wie dies auch in der Figur angedeutet ist.

So ist es möglich, dass bei einem örtlichen Bereich mit wenigen Hindernissen jeder der Mobilstationen nur wenige, z.B. nur ein oder zwei Rake-Finger-Einheiten 16 zugeteilt werden. Mit diesen wenigen Rake-Finger-Einheiten 16 können diejenigen wenigen Signalpfade verarbeitet werden, die aufgrund der wenigen Hindernisse vorhanden sind. In diesem Fall können relativ viele Mobilstationen von der Basisstation 10 bedient werden.

Bei einem örtlichen Bereich mit vielen Hindernissen ist es hingegen möglich, dass jeder der Mobilstationen mehrere Rake-Finger-Einheiten 16 zugeteilt werden. Diese größere Anzahl von Rake-Finger-Einheiten 16 ist erforderlich, um die größere Anzahl von Signalpfaden zu verarbeiten, die aufgrund der vielen Hindernisse vorhanden sind. In diesem Fall können nicht so viele Mobilstationen von der Basisstation 10 bedient werden, was aufgrund der schlechten Bedingungen jedoch auch bei Vorhandensein einer größeren Anzahl von Rake-Finger-Einheiten 16 gelten würde.

Jede der Rake-Finger-Einheiten 16 enthält einen Korrelator. Der Korrelator der für einen Einzelwert ausgewählten Rake-Finger-Einheit 16 wird auf diesen bestimmten Einzelwert abgestimmt. Die hierzu erforderlichen Informationen, insbesondere die Identifikation der Mobilstation, die Identifikation der Antenne und die Angabe der zeitlichen Verhältnisse, werden von der Path-Selector-Einheit 14 über den Rake-Finger-Manager 15 an die jeweilige Rake-Finger-Einheit 16 weitergegeben.

Dem Rake-Finger-Manager 15 stehen eine bestimmte Anzahl von Rake-Finger-Einheiten 16 zur Verteilung an die vorhandenen Mobilstationen zur Verfügung. Der Rake-Finger-Manager 13 überwacht andauernd, dass nicht mehr Rake-Finger-Einheiten 16 verteilt werden als vorhanden sind. Wird die bestimmte Anzahl der Rake-Finger-Einheiten 16 erreicht, so ergreift der Rake-Finger-Manager 15 Maßnahmen, um ein Übersteigen dieser Anzahl zu vermeiden. Dabei ist es möglich, dass die Anzahl der noch vorhandenen, nicht benutzten Rake-Finger-Einheiten 16 andauernd an die Path-Selector-Einheit 14 mitgeteilt wird.

Diese Maßnahmen können z.B. darin bestehen, die Selektionsbedingungen innerhalb der Path-Selector-Einheit 14 derart zu verändern, dass weniger Einzelwerte aus den erzeugten Profilen ausgewählt werden. Ebenfalls kann die Anzahl auswählbarer Einzelwerte pro Mobilstation auf eine Maximalzahl begrenzt werden. Die Maximalzahl kann dabei von der Anzahl unbenutzter Rake-Finger-Einheiten 16 abhängig sein. Die Selektionsbedingungen werden somit derart verändert, dass die Anzahl der Einzelwerte niemals größer wird als die Anzahl der vorhandenen Rake-Finger-Einheiten 16. Damit können höchsten die maximale Anzahl der vorhandenen Rake-Finger-Einheiten 16 als ausgewählte Einzelwerte vorhanden sein.

Die Rake-Finger-Einheiten 16 bzw. die darin enthaltenen Korrelatoren verarbeiten die von den Antennen 11 empfangenen Signale der Mobilstationen. Die von den Rake-Finger-Einheiten 16 erzeugten Signale werden von der Kombinationseinheit 17 entsprechend ihrer Zugehörigkeit zu den verschiedenen Mobilstationen zusammengefasst. Diese Zugehörigkeit ergibt sich aus den von der Path-Selector-Einheit 14 ausgewählten Einzelwerten eines bestimmten Profils, denen wiederum über den Rake-Finger-Manager 15 die entsprechend zusammengehörigen Rake-Finger-Einheiten 16 zugeordnet sind. Am Ausgang der Kombinationseinheit 17 ist somit für jede Mobilstation ein Signal vorhanden, das einen reellen Amplitudenwert der jeweiligen Mobilstation darstellt.

## Patentansprüche

1. Verfahren zum Betreiben eines funkbasierten Kommunikationssystems, insbesondere eines CDMA-Kommunikationssystems wobei cDMA für code division multiple access steht, bei dem von einer Mehrzahl von Antennen (11) einer Basisstation (10) Signale von einer Mehrzahl von Mobilstationen empfangen werden, bei dem die von den Antennen (11) empfangenen Signale einer vorgegebenen Anzahl von Path-Profiler-Einheiten (12) zugeführt werden, und bei dem die Path-Profiler-Einheiten (12) mit Hilfe eines Path-Profiler-Managers (13) auf die Mehrzahl von Antennen (11) und die Mehrzahl von Mobilstationen verteilt werden, bei dem von den Path-Profiler-Einheiten (12) nach Signalpfaden gesucht wird, **dadurch gekennzeichnet, dass** über die die Mobilstationen Signale an die Basisstationen senden, dass von den Path-Profiler-Einheiten (12) Profile der empfangenen Signale ermittelt werden, dass von einer Path-Selector-Einheit (14) bestimmte Einzelwerte aus den ermittelten Profilen ausgewählt werden, und bei dem eine Mehrzahl von Rake-Finger-Einheiten (16) den Eintreffzeitpunkten der ausgewählten Einzelwerte zugeordnet werden.

2. Verfahren nach Anspruch 1, **dadurch gekennzeichnet, dass** die vorgegebene Anzahl von Path-Profiler-Einheiten (12) mit Hilfe des Path-Profiler-Managers (13) in Abhängigkeit von der Anzahl der vorhandenen Mobilstationen verteilt werden.

3. Verfahren nach einem der Ansprüche 1 oder 2, **dadurch gekennzeichnet, dass** die vorgegebene Anzahl von Path-Profiler-Einheiten (12) mit Hilfe des Path-Profiler-Managers (13) in Abhängigkeit von dem Zeitabstand verteilt werden, in dem die Ermittlung der Profile der empfangenen Signale wiederholt wird.

4. Verfahren nach Anspruch 3, **dadurch gekennzeichnet, dass** der Zeitabstand für verschiedene Mobilstationen unterschiedlich gewählt wird.

5. Verfahren nach Anspruch 3 oder 4, **dadurch gekennzeichnet, dass** der Zeitabstand für unterschiedliche Antennen unterschiedlich gewählt wird.

6. Verfahren nach einem der Ansprüche 1 bis 5, bei dem jede der Path-Profiler-Einheiten (12) jeweils eine bestimmte Anzahl von Korrelatoren aufweist, **dadurch gekennzeichnet, dass** ein vollständiges Profil von mehreren Path-Profiler-Einheiten (12) ermittelt wird, und dass von jeder der beteiligten Path-Profiler-Einheiten (12) ein Teilprofil ermittelt wird, wobei vorzugsweise bestimmte Teilprofile in dem vollständigen Profil häufiger ermittelt werden als andere Teilprofile.

7. Verfahren nach einem der Ansprüche 1 bis 6, **dadurch gekennzeichnet, dass** eine vorgegebene Anzahl von Rake-Finger-Einheiten (16) vorhanden sind, die mit Hilfe eines Rake-Finger-Managers (15) auf die Mehrzahl von Antennen (11) und die Eintreffzeitpunkte der ausgewählten Einzelwerte verteilt werden.

8. Verfahren nach Anspruch 7, **dadurch gekennzeichnet, dass** die Auswahl der Eintreffzeitpunkte und Antennen derart ausgeführt wird, dass die Anzahl der vorhandenen Rake-Finger-Einheiten (16) immer größer oder gleich ist der Anzahl der ausgewählten Eintreffzeitpunkte und Antennen.

9. Verfahren nach Anspruch 7 oder 8, **dadurch gekennzeichnet, dass** für die Auswahl der bestimmten Einzelwerte ein Schwellwert vorhanden ist, der in Abhängigkeit von der Anzahl der vorhandenen Rake-Finger-Einheiten (16) verändert wird.

10. Verfahren nach einem der Ansprüche 7 bis 9, **dadurch gekennzeichnet, dass** bei der Auswahl der bestimmten Einzelwerte eine Maximalzahl für die Anzahl auswählbarer Einzelwerte pro Mobilstation vorgegeben wird, die insbesondere von der Anzahl der unbenutzten Rake-Finger-Einheiten (16) abhängig ist.

11. Basisstation (10) für ein funkbasiertes Kommunikationssystem, insbesondere für ein CDMA-Kommunikationssystem wobei CDMA für code division multiple access steht, mit einer Mehrzahl von Antennen (11) zum Empfangen von Signalen von einer Mehrzahl von Mobilstationen, bei der die von den Antennen (11) empfangenen Signale einer vorgegebenen Anzahl von Path-Profiler-Einheiten (12) zugeführt werden, und bei der die Path-Profiler-Einheiten (12) mit Hilfe eines Path-Profiler-Managers (13) auf die Mehrzahl von Antennen (11) und die Mehrzahl von Mobilstationen verteilt werden, mit Path-Profiler-Einheiten (12) zum Suchen nach Signalpfaden, über die die Mobilstationen Signale an die Basisstationen senden, **dadurch gekennzeichnet, dass** die Path-Profiler-Einheiten (12) zum Ermitteln von Profilen der empfangenen Signale bestimmt sind, dass die Path-Selector-Einheit (14) zur Auswahl von bestimmten Einzelwerten aus den ermittelten Profilen bestimmt ist, und **dass** eine Mehrzahl von Rake-Finger-Einheiten (16) den Eintreffzeitpunkten der ausgewählten Einzelwerte zugeordnet werden.

12. Basisstation (10) nach Anspruch 11, **dadurch gekennzeichnet, dass** eine vorgegebene Anzahl von Rake-Finger-Einheiten (16) vorhanden sind, die mit Hilfe eines Rake-Finger-Managers (15) auf die Mehrzahl von Antennen (11) und die Eintreffzeitpunkte der ausgewählten Einzelwerte verteilbar sind.

13. Basisstation (10) nach einem der Ansprüche 11 oder 12, **dadurch gekennzeichnet, dass** die Path-Profiler-Einheiten (12) als programmierbare logische Schaltungen und der Path-Profiler-Manager (13) als digitaler Mikroprozessor ausgebildet sind.

14. Basisstation (10) nach einem der Ansprüche 11 bis 13, **dadurch gekennzeichnet, dass** die Rake-Finger-Einheiten (16) als programmierbare logische Schaltungen und der Rake-Finger-Manager (15) als digitaler Mikroprozessor ausgebildet sind.

15. Funkbasiertes Kommunikationssystem mit einer Basisstation (10) nach einem der Ansprüche 11 bis 14.

## Claims

1. Method for operating a radio-based communications system, in particular a CDMA communications system, CDMA standing for code division multiple access, wherein a plurality of antennae (11) of a base station (10) receive signals from a plurality of mobile stations, the signals received by the antennae (11) are supplied to a predefined number of path profiler units (12), the path profiler, units (12) are distributed, by means of a path profiler manager (13), to the plurality of antennae (11) and the plurality of mobile stations, and the path profiler units (12) search for signal paths via which the mobile stations send signals to the base stations, **characterized in that** the path profiler units (12) ascertain profiles of the received signals, a path selector unit (14) selects certain single values from the ascertained profiles, and a plurality of rake finger units (16) are associated with the arrival instants of the selected single values.

2. Method according to claim 1, **characterized in that** the predefined number of path profiler units (12) is distributed, by means of the path profiler manager (13), in dependence on the number of mobile stations that are present.

3. Method according to either of claims 1 or 2, **characterized in that** the predefined number of path profiler units (12) is distributed, by means of the path profiler manager (13), in dependence on the Lime interval in which the ascertainment of the profiles of the received signals is repeated.

4. Method according to claim 3, **characterized in that** the time interval is selected such that it is different for different mobile stations.

5. Method according to either of claims 3 or 4, **characterized in that** the time interval is selected such that it is different for different antennae.

6. Method according to any one of claims 1 to 5, wherein each of the path profiler units (12) has a respective given number of correlators, **characterized in that** a complete profile is ascertained by a plurality of path profiler units (12), and a partial profile is ascertained by each of the path profiler units (12) involved, certain partial profiles preferably being ascertained more frequently in the complete profile than other partial profiles.

7. Method according to any one of claims 1. to 6, **characterized in that** there is available a predefined number of rake finger units (16) which are distributed, by means of a rake finger manager (15), to the plurality of antennae (11) and the arrival instants of the selected single values.

8. Method according to claim 7, **characterized in that** the selection of the arrival instants and antennae is effected in such a way that the number of available rake finger units (16) is always greater than or equal to the number of selected arrival instants and antennae.

9. Method according to either of claims 7 or 8, **characterized in that** there is provided for the selection of the certain single values a threshold value which is varied in dependence on the number of available rake finger units (16).

10. Method according to any one of claims 7 to 9, **characterized in that**, in the selection of the certain single values, a maximum number is predefined for the number of single values that can be selected per mobile station, which maximum number is dependent, in particular, on the number of unused rake finger units (16) .

11. Base station (10) for a radio-based communications system, in particular for a CDMA communications system, CDMA standing for code division multiple access, said base station having a plurality of antennae (11) for receiving signals from a plurality of mobile stations, wherein the signals received by the antennae (11) are supplied to a predefined number of path profiler units (12), and the path profiler units (12) are distributed, by means of a path profiler manager (13), to the plurality of antennae (11) and the plurality of mobile stations, said base station having path profiler units (12) for searching for signal paths via which the mobile stations send signals to the base stations, **characterized in that** the path profiler units (12) are designed for ascertaining profiles of the received signals, the path selector unit (14) is designed for selecting certain single values from the ascertained profiles, and a plurality of rake finger units (16) are associated with the arrival instants of the selected single values.

12. Base station (10) according to claim 11, **characterized in that** there is provided a predefined number of rake finger units (16) which can be distributed, by means of a rake finger manager (15), to the plurality of antennae (11) and the arrival instants of the selected single values.

13. Base station (10) according to either of claims 11 or 12, **characterized in that** the path profiler units (12) are realized as programmable logic circuits and the path profiler manager (13) is realized as a digital microprocessor.

14. Base station (10) according to any one of claims 11 to 13, **characterized in that** the rake finger units (16) are realized as programmable logic circuits and the rake finger manager (15) is realized as a digital microprocessor.

15. Radio-based communications system having a base station (10) according to any one of claims 11 to 14.

## Revendications

1. Procédé pour l'exploitation d'un système de communication basé sur la radio, en particulier d'un système de communication CDMA, CDMA signifiant code division multiple access, dans lequel des signaux sont reçus d'une pluralité d'antennes (11) d'une station de base (10) par une pluralité de stations mobiles, dans lequel les signaux reçus des antennes (11) sont amenés à un nombre prédéfini d'unités Path-Profiler (12), et dans lequel les unités Path-Profiler (12) sont réparties à l'aide d'un Path-Profiler-Manager (16) entre la pluralité d'antennes (11) et la pluralité de stations mobiles, dans lequel les unités Path-Profiler (12) recherchent des chemins de signal, **caractérisé en ce que** les stations mobiles envoient des signaux aux stations de base, **en ce que** les unités Path-Profiler (12) déterminent des profils des signaux reçus, **en ce que** une unité Path-Selector (14) sélectionne des valeurs individuelles définies à partir des profils déterminés, et dans lequel une pluralité d'unités Rake-Finger (16) est attribuée aux moments d'arrivée des valeurs individuelles sélectionnées.

2. Procédé selon la revendication 1, **caractérisé en ce que** le nombre prédéfini d'unités Path-Profiler (12) est réparti à l'aide du Path-Profiler-Managcr (16) en fonction du nombre des stations mobiles présentes.

3. Procédé selon l'une quelconques des revendications 1 ou 2, **caractérisé en ce que** le nombre prédéfini d'unités Path-Profiler (12) est réparti à l'aide du Path-Profiler-Manager (16) en fonction de l'intervalle de temps dans lequel le calcul des profils de signaux reçus est répété.

4. Procédé selon la revendication 3, **caractérisé en ce que** l'intervalle de temps est choisi différent pour différentes stations mobiles.

5. Procédé selon la revendication 3 ou 4, **caractérisé en ce que** l'intervalle de temps est choisi différent pour différentes antennes.

6. Procédé selon l'une quelconque des revendications 1 à 5, dans lequel chacune des unités Path-Profiler (12) présente respectivement un nombre défini de corrélateurs, **caractérisé en ce qu'**un profil complet de plusieurs unités Path-Profiler (12) est déterminé et **en ce que** chacune des unités Path-Profiler (12) impliquées déterminent un profil partiel, de préférence certains profils partiels étant calculés plus fréquemment que d'autres profils partiels dans le profil complet.

7. Procédé selon l'une quelconque des revendications 1 à 6, **caractérisé en ce qu'**un nombre prédéfini d'unités Rake-Finger (16) est présent, lesquelles sont réparties à l'aide d'un Rake-Finger-Manager (15) entre la pluralité d'antennes (11) et les moments d'arrivée des valeurs individuelles sélectionnées.

8. Procédé selon la revendication 7, **caractérisé en ce que** le choix des moments d'arrivée et des antennes est effectué de telle sorte que le nombre des unités Rake-Finger (16) présentes est toujours supérieur ou égal au nombre des moments d'arrivée et antennes sélectionnés.

9. Procédé selon la revendication 7 ou 8, **caractérisé en ce que**, pour le choix des valeurs individuelles définies, il existe une valeur seuil qui est modifiée en fonction du nombre des unités Rake-Finger (16) présentes.

10. Procédé selon l'une quelconque des revendications 7 à 9, **caractérisé en ce que**, pour le choix des valeurs individuelles définies, on peut définir un nombre maximum pour le nombre de valeurs individuelles sélectionnables par station mobile qui est dépendant en particulier du nombre des unités Rake-Finger (16) non utilisées.

11. Station de base (10) pour un système de communication basé sur la radio, en particulier pour un système de communication CDMA, CDMA signifiant code division multiple access, avec une pluralité d'antennes (11) pour la réception de signaux et d'une pluralité de stations mobiles, dans laquelle les signaux reçus des antennes (11) sont amenés à un nombre prédéfini d'unités Path-Protiler (12) et dans laquelle les unités Path-Profiler (12) sont réparties à l'aide d'un Path-Profiler-Manager (15) entre la pluralité d'antennes (11) et la pluralité de stations mobiles, avec des unités Path-Profiler (12) pour la recherche de chemins de signal, par lesquels les stations mobiles envoient des signaux aux stations de base, **caractérisée en ce que** les unités Path-Profiler (12) sont destinées à déterminer des profils des signaux reçus, **en ce que** l'unité Path-Selector (14) est destinée à sélectionner des valeurs individuelles définies à partir des profils déterminés et **en ce qu'**une pluralité d'unités Rake-Finger (16) est attribuée aux moments d'arrivée des valeurs individuelles sélectionnées.

12. Station de base (10) selon la revendication 11, **caractérisée en ce qu'**un nombre prédéfini d'unités Rake-Finger (16) est présent, lesquelles peuvent être réparties à l'aide d'un Rake-Finger-Manager (15) entre la pluralité d'antennes (11) et les moments d'arrivée des valeurs individuelles sélectionnées.

13. Station de base (10) selon l'une quelconque des revendications 11 ou 12, **caractérisée en ce que** les unités Path-Profiler (12) sont conçues comme des circuits logiques programmables et le Path-Profiler-Manager (13) comme un microprocesseur numérique.

14. Station de base (10) selon l'une quelconque des revendications 11 à 13, **caractérisée en ce que** les unités Rake-Finger (16) sont conçues comme des circuits logiques programmables et le Rake-Finger-Manager (15) comme un microprocesseur numérique.

15. Système de communication basé sur la radio avec une station de base (10) salon l'une quelconque des revendications 11 à 14.
